# EUROPEAN PATENT SPECIFICATION

(11) **EP 1 207 975 B1**
(45) Date of publication and mention of the grant of the patent: **12.05.2004**
(21) Application number: 00932183.7
(22) Date of filing: 09.05.2000
(51) Int. Cl.: B22C 1/16, B22C 1/00

(54) **SHELL MOLD BINDER COMPOSITION AND METHOD**
BINDEMITTELZUSAMMENSETZUNG FÜR FEINGIESSEN UND HERSTELLUNGSVERFAHREN
COMPOSITION LIANTE DE MOULE EN COQUILLE ET PROCEDE ASSOCIE

(30) Priority: 25.08.1999 US 150626 P; 01.09.1999 US 151832 P; 16.03.2000 US 527047
(43) Date of publication of application: 29.05.2002
(73) Proprietor: DENTSPLY INTERNATIONAL, INC., York, PA 17405-0872 (US)
(72) Inventor: WANG, Ming-Jong, Peter, Toledo, OH 43617 (US); HENDRICKS, Michael, J., Holland, OH 43528 (US)
(74) Representative: Hartz, Nikolai F., Dr.
(86) International application number: PCT/US2000/012571
(87) International publication number: WO 2001/014082

(56) References cited:
- EP-A- 0 638 379
- US-A- 3 668 168
- US-A- 3 754 946
- PATENT ABSTRACTS OF JAPAN vol. 1995, no. 01, 28 February 1995 (1995-02-28) & JP 06 277794 A (DAIDO STEEL CO LTD), 4 October 1994 (1994-10-04)
- PATENT ABSTRACTS OF JAPAN vol. 1995, no. 01, 28 February 1995 (1995-02-28) & JP 06 277795 A (DAIDO STEEL CO LTD), 4 October 1994 (1994-10-04)

## Description

### FIELD OF THE INVENTION

This invention relates to water based back-up binder composition comprising colloidal silica and polymer(s) and the use thereof to create rapid-processing slurry for making shell molds. The back-up binder composition of the invention includes fibers and is used to quickly make ceramic shell molds for investment casting processes. Prior art binder compositions do not include fibers. The invention provides a composition that significantly shortens the time necessary to produce a ceramic shell mold. The composition of the invention, when used to produce a shell-mold for the investment casting process, not only provides for decreased processing times by reducing the number of shell dips, but also provides for better handling and dewaxing through increased green strength.

Producing a shell-mold for investment casting usually includes dipping a wax replica (or model) into a slurry containing a binder and a refractory powder. The slurry coats the wax, and excess slurry is allowed to drain off. A coarser refractory is sprinkled onto the wet wax pattern, and this combination is allowed to dry. Additional coatings of slurry and refractory are applied by the same method until the mold has sufficient thickness and strength for further processing. A primary coat is defined as the initial one or two coats applied to the wax pattern or model. The purpose of the primary coats is to provides a surface with a high refractoriness for the metal to be cast against and to duplicate the detail of the model. Primary binders are colloidal silica based and normally contain other additives such as wetting agents, anti-foam agents and polymers. The refractory flour is typically 200 - 400 mesh and is normally zircon but could also contain some fused silica. Zircon is chosen due to its excellent refractory properties. The stucco materials for primary coats are typically finer (50 - 150 mesh) to help capture the detail of the model. The stucco material for primary coats is typically zircon but could be fused silica.Backup coats are normally applied to the pattern after the primary coats. A seal coat is a slurry coat only, no stucco is applied. This seal coat is commonly added by the industry to "seal" loose stucco to the pattern. The main purpose of the backup coats is to provide the shell adequate strength to withstand the forces and pressures that will be exerted on it in the process of producing a casting. A seal coat is applied after the final backup coat.. The main stress is due to the pressure exerted on the shell by the wax during the wax removal process. The number of backup coats required for each shell depends on the size of the overall mold as well as the amount of alloy that will be poured into the shell.

EP-A-0 638 379 discloses an investment casting shell-mold binder composition comprising a mixture of a colloidal silica sol having an average particle size of 3 to 100 nm and latex polymer(s) with a silica content of 8 - 50 % by weight.

It is a common practice in the field of investment casting to characterize the green (unfired) properties of a shell mold (the properties prior to firing) by the 3-point bending, where a single point load is gradually applied to a green shell test piece, supported on two stationary points, until it fractures. One major interest of the bending test is to acquire one measure of the shell material green strength: the Modulus of Rupture (MOR).

Modulus of Rupture (MOR), as used herein is defined by the following formula:

MOR = (3ₓL_{fx}S)/(2ₓWₓT²)

Where L_{f} is the maximum load at fracture, S the span between the two stationary points and W and T the width and thickness of the test bar respectively, as set forth in Investment Casting Institute Ceramic test procedure 770-79 (1979). MOR is an intrinsic material property, thus, a property regardless of the physical dimensions of the test bar. Knowing that shell thickness is a major factor determining the actual shell performance when the shell is subjected to an external load, adjusted fracture load (AFL), which takes into account the thickness, is a more realistic measure of the shell strength. AFL information and formulas have been published in numerous industry papers.

Adjusted fracture load (AFL) as used herein is defined by the following formula:

AFL = [fₓ(MOR)ₓT²]

Where f is a constant factor determined by the type of bending as set forth in 'Faster and Safer Shell Production" by Carl Schwartz of Ransom & Randolph in 1988.

"Polymer" in shell-mold for investment casting generally refers to a macromolecule formed by the chemical union of 5 or more identical combining units called monomers. The polymer types used in this invention are known as elastomers. An elastomer is a polymer possessing elastic properties.

Refractory, as used herein refers to inorganic particulate material useful in making shell-molds for investment casting. Refractory material is resistant to change, especially during the application of heat. The main refractories used in the industry are as follows: Zircon: ZrSiO₄ (Zirconium Silicate), Alumina: Al₂O₃ (Aluminum oxide), Silica: SiO₂ (Silicon Dioxide) and Alumino-silicate: x Al₂O₃. ySiO₂ Blends of alumina and silica that have usually been fired to high temperature (2500°F.) to form a stable phase known as mullite, and to minimize shrinkage due to firing. These refractories are in two forms: one form is the form of a powder, and the other form is the form of a coarser sand, usually called stucco. Both the powders and stuccos can vary in their sizes, according to the respective application.

Refractory powder (or refractory flour), as used herein refers to refractory particulate material having a particle size such that at least 60 percent of the particles are smaller (finer) than 100 mesh. Preferably refractory powder (or refractory flour) is refractory particulate material having a particle size such that at least 90 percent of the particles are smaller (finer) than 100 mesh.

Refractory sand, (or refractory stucco) as used herein refers to refractory particulate material having a particle size that at least 60 percent of the particles are larger (coarser) than 100 mesh. Preferably refractory sand, (or refractory stucco) is refractory particulate material having a particle size such that at least 90 percent of the particles are larger (coarser) than 100 mesh.

"Latex Polymer" as used herein refers to an elastomeric polymer in water. For example elastomeric polymer of the styrene butadiene (S/B type) group and the elastomeric polymer of the acrylic group typically have the following properties:

| LATEX # | PH | SOLIDS Percent | Specific viscosity (centipoise) | Specific gravity (g/ml) TYPE |
|---|---|---|---|---|
| 100 | 8-9 | 53% | N/A | 1.01 S/B |
| 101 | 6-7 | 50% | N/A | 1.01 S/B |
| 120 | 8.5 | 50% | 200 | 1.03 Acrylic |
| 121 | 7.0 | 50% | 40 | 1.01 Acrylic |
| 140 | 9.5 | 47% | 100 | 1.05 Acrylic |

"Colloidal Silica" in shell-mold for investment casting generally refers to an aqueous dispersion of minute silica particles, usually employing a small amount of a strong base (e.g., ammonia or sodium hydroxide) as a stabilizer to yield a stable suspension. The resulting pH is typically in the 8.0-11.0 range.

"Dewaxing" refers to removal of wax from within an unfired mold coating to from an unfired mold, which is then fired and used in investment casting.

"Primary coating" refers to an initial coating of slurry and stucco material adapted to record minute surface details and formed, as is known in the art, from a slurry formed from Primcote® binder material manufactured by Ransom & Randolph, and typically coated on a wax model by dipping in a slurry thereof.

"Inorganic fibers" as used herein refers to fibers having a length to width ratio of at least 10, more preferably 30, comprising inorganic material, and more preferably consisting essentially of inorganic material.

It is an object of the invention to provide a method of forming a shell mold, comprising providing an investment casting shell-mold composition wherein a polymer and fiber free binder and flour pattern coating is formed in the same manner as the binder and flour pattern coating except without the polymer and fibers, the fiber and polymer free binder and flour pattern coating has a fiber and polymer free green MOR and a polymer and fiber free green AFL, the binder and flour pattern coating has a polymer and fiber containing green MOR and a polymer and fiber containing green AFL, the polymer and fiber containing green MOR is at least 50 percent greater than the polymer and fiber free green MOR, the polymer and fiber containing green AFL is at least 150 percent greater than the polymer and fiber free green AFL at the same number of coats, and, at at least 40 percent of coat reduction, the polymer and fiber containing green AFL is equal to the polymer and fiber free green AFL.

It is an object of the invention to provide a method of forming a shell mold, comprising providing an investment casting shell-mold composition wherein a polymer containing but fiber free binder and flour pattern coating is formed in the same manner as the binder and flour pattern coating except without the fibers, the polymer containing but fiber free binder and flour pattern coating has a polymer containing but fiber free green MOR and a polymer containing but fiber free green AFL, the binder and flour pattern coating has a polymer and fiber containing green MOR and a polymer and fiber containing green AFL, the polymer and fiber containing green MOR is at least 25 percent greater than the polymer containing but fiber free green MOR, and the polymer and fiber containing green AFL is at least 100 percent greater than the polymer containing but fiber free green AFL at the same number of coats, and, at at least 25 percent of coat reduction, the polymer and fiber containing green AFL is equal to the polymer containing but fiber free green AFL.

It is an object of the invention to provide a method of forming a shell mold, comprising providing an investment casting shell-mold composition comprising 0.1 to 70 percent by weight inorganic fibers providing a disposable pattern, applying the composition to the pattern to form a binder coated pattern, applying refractory flour to the binder coated pattern to form a binder and flour pattern coating, the improvement wherein the binder composition comprises.

It is an object of the invention to provide in a method of forming a shell mold, comprising providing an investment casting shell-mold composition comprising a binder composition comprising a mixture of 20-98 percent by weight of a colloidal sol comprising inorganic particles, 1-20 percent by weight organic polymer; applying refractory flour to the binder to form a slurry, providing a primary coated disposable pattern, applying the slurry composition to the pattern to form a slurry coated pattern, draining and applying a dry coarse refractory layer (stucco) the improvement wherein the binder composition comprises 0.1 to 70 percent by weight of inorganic fibers.

It is an object of the invention to provide an investment casting shell-mold composition comprising: a binder composition comprising a mixture of 20-98 percent by weight of a colloidal sol comprising inorganic particles, 1-20 percent by weight organic polymer, and 0.1 to 70 percent by weight of inorganic fibers; wherein the inorganic particles have an average particle size smaller than 600 mesh, and the inorganic fibers have an average length to diameter ratio of more than 30.

It is an object of the invention to provide a method of forming a shell mold, comprising the steps of providing an investment casting shell-mold composition comprising: a binder composition comprising a mixture of 20-98 percent by weight of a colloidal sol comprising inorganic particles, 1-20 percent by weight organic polymer, and 0.1 to 70 percent by weight of inorganic fibers; wherein the inorganic particles have an average particle size smaller than 600 mesh, and the inorganic fibers have an average length to diameter ratio of more than 30, applying refractory flour to the binder to form a slurry, providing a primary coated disposable pattern, applying the slurry composition to the pattern to form a slurry coated pattern, draining and applying a dry coarse refractory layer (stucco).

### SUMMARY OF THE INVENTION

The invention provides a composition that significantly shortens the time necessary to produce a ceramic shell mold. The composition of the invention, when used to produce a shell-mold for the investment casting process, not only provides for decreased processing times by reducing the number of shell dips, but also provides for better handling and dewaxing through increased green strength.

The invention to provide a method of forming a shell mold, comprising providing an investment casting shell-mold composition comprising 0.1 to 70 percent by weight inorganic fibers providing a disposable pattern, applying the composition to the pattern to form a binder coated pattern, applying refractory flour to the binder coated pattern to form a binder and flour pattern coating, the improvement wherein the binder composition comprises.

The invention provides an investment casting shell-mold composition comprising: a binder composition comprising a mixture of 20-98 percent by weight of a colloidal sol comprising inorganic particles, 1-20 percent by weight organic polymer, and 0.1 to 70 percent by weight of inorganic fibers; wherein the inorganic particles have an average particle size smaller than 600 mesh, and the inorganic fibers have an average length to diameter ratio of more than 30.

The invention provides an improvement in a method of forming a shell mold, comprising providing an investment casting shell-mold composition comprising a binder composition comprising a mixture of 20-98 percent by weight of a colloidal sol comprising inorganic particles, 1-20 percent by weight organic polymer; mixing refractory flour to the binder to form a slurry, providing a primary coated disposable pattern, applying the slurry composition to the pattern to form a slurry coated pattern, draining and applying a dry coarse refractory layer (stucco); the improvement wherein the binder composition comprises 0.1 to 70 percent by weight of inorganic fibers.

The invention provides a method of forming a shell mold, comprising the steps of providing an investment casting shell-mold composition comprising: a binder composition comprising a mixture of 20-98 percent by weight of a colloidal sol comprising inorganic particles, 1-20 percent by weight organic polymer, and 0.1 to 70 percent by weight of inorganic fibers; wherein the inorganic particles have an average particle size smaller than 600 mesh, and the inorganic fibers have an average length to diameter ratio of more than 30, applying refractory flour to the binder to form a slurry, providing a primary coated disposable pattern, applying the slurry composition to the pattern to form a slurry coated pattern, draining and applying a dry coarse refractory layer (stucco).

The invention provides a method of forming a shell mold, comprising providing an investment casting shell-mold composition wherein a polymer and fiber free binder and flour pattern coating and a polymer containing but fiber free binder and flour pattern coating are formed in the same manner as the binder and flour pattern coating except without the fibers and polymer and without the fibers, the polymer and fiber free binder and flour pattern coating has a polymer and fiber free green AFL, the polymer containing but fiber free binder and flour pattern coating has a polymer containing but fiber free green AFL, the binder and flour pattern coating has a polymer and fiber containing green AFL, at the same number of coats, the polymer and fiber containing green AFL is at least 150 percent greater than the polymer and fiber free green AFL and at least 100 percent greater than the polymer containing but fiber free green AFL.

### DETAILED DESCRIPTION OF THE INVENTION

In general, the binder in accordance with the invention may be used to make a shell-mold according to the following process. The binder preferably includes a mixture of a colloidal sol, inorganic fiber and a latex polymer. A refractory powder is added to the binder to make a slurry, and the slurry is mixed to wet-out the powder. A disposable pattern of material such as a wax pattern is dipped into the slurry, the excess slurry is drained off, and the pattern is stuccoed with an additional refractory while it is still wet. The pattern and slurry are dried to set bonds in the binder.

The dipping, draining, and stuccoing steps may be repeated as necessary to build up a shell mold having a predetermined, desired thickness. After the mold is completed, the disposable pattern is eliminated by heating and draining the liquid pattern material, and the shell mold is fired. After firing, molten metal is poured into the shell mold and allowed to cool. After cooling, the shell mold is broken off from the metal to provide a desired cast metal component.

The latex polymer or polymers are present in the binder to increase the green strength properties of the shells made from the binder. Additionally the latex polymer or polymers reduce the processing time between dips, compared to dips made with binders without the latex polymers or polymers, during the mold making process. The inorganic fibers are present to increase the thickness of each coat of binder containing latex polymer or polymers, thus creating a sufficiently strong shell, of similar thickness, in less coats compared to other exisiting binders.

Colloidal silica sols which are preferred for use in this invention have average particle sizes of 3 to 100 nanometers (nm), more preferably 5-20 nm, and have a silica content of 8-50% (by weight), and preferably 12-35%. There are many types of latexes, such as vinyl acetates, polyvinylidene chlorides, acrylics, styrene butadienes, etc. The styrene butadiene latexes have received the most attention in investment casting, as many of these possess good compatibility when mixed with colloidal silica, and can add to improved shell green strength. A preferred latex polymer includes a blend of acrylic polymers with the following properties: a pH in the range of 6-11 (most preferably 7-10); a viscosity in the range of 50-1000 centipoise (most preferably 50-500); a solids content of 40-65% (most preferably 45-55%); and an average particle size of 0.05-1.0 microns (most preferably 0.1-0.5 microns). Preferred inorganic fibers for use in accordance with the invention have an average length to diameter ratio of more than 30. Examples of refractory flours (or powders) commonly used in the investment casting industry are zircon (ZrSiO₄), fused silica (SiO₂), alumina (Al₂O₃), zirconia (ZrO₂), and alumino-silicate (various combinations of Al₂O₃ and SiO₂, usually fired to high temperatures, 2500 degree F). Any other compatible powder system can also be used. The sizes of the powders used are typically classified as -120 mesh (U.S.A. Standard Sieves) to -400 mesh. The sizes normally used are well known to those skilled in the art, and other sizes are not excluded from the scope of this invention. The slurry preferably will have a viscosity in the range of 5 to 50 seconds, as measured by a #4 Zahn cup.

The latex polymer is added to the colloidal silica base in any proportion such that the ratio of colloidal silica to latex polymer(s) is preferably greater than 1:1, and more preferably greater than 3:1. The concentration of colloidal silica would be expected to be between 8% and 80% by weight of the composition. It is preferred that the latex polymer be present in an amount of 2 to 20% by weight, based on the binder weight. Other ingredients (surfactants , biocides, etc.), well known to those skilled in the art, can also be added to the binder without altering the spirit and scope of this invention. Refractory flour is mixed with the binder to form a slurry. To a primary coated disposable pattern is applied the slurry composition to form a slurry coated pattern. A dry coarse refractory layer (stucco) is applied to the slurry coated pattern. A stucco coated pattern is formed by repeatedly drying, dipping, draining, stuccoing and drying.

A preferred embodiment the invention provides in a method of forming a shell mold, comprising providing an investment casting shell-mold composition comprising a binder composition comprising a mixture of 20-98 percent by weight of a colloidal sol comprising inorganic particles, 1-20 percent by weight organic polymer; applying refractory flour to the binder to form a slurry, providing a primary coated disposable pattern, applying the slurry composition to the pattern to form a slurry coated pattern, draining and applying a dry coarse refractory layer (stucco). The improvement is that the binder composition comprises 0.1 to 70 percent by weight of inorganic fibers. A polymer and fiber free binder and flour pattern coating is formed in the same manner as the binder and flour pattern coating except without the polymer and fibers. The polymer and fiber free binder and flour pattern coating has a polymer and fiber free green AFL. The binder and flour pattern coating has a polymer and fiber containing green AFL. At the same number of coats, the polymer and fiber containing green AFL is preferably at least 75 percent greater than the polymer and fiber free green AFL. The polymer and fiber containing green AFL is more preferably at least 100 percent greater than the polymer and fiber free green AFL. The polymer and fiber containing green AFL is most preferably at least 150 percent greater than the polymer and fiber free green AFL. Another polymer containing but fiber free binder and flour pattern coating is formed in the same manner as the binder and flour pattern coating except without the fibers. The polymer containing but fiber free binder and flour pattern coating has a polymer containing but fiber free green AFL. At the same number of coats, the polymer and fiber containing green AFL is preferably at least 50 percent greater than the polymer containing but fiber free green AFL. The polymer and fiber containing green AFL is more preferably at least 75 percent greater than the polymer containing but fiber free green AFL. The polymer and fiber containing green AFL is most preferably at least 100 percent greater than the polymer containing but fiber free green AFL.

A preferred embodiment the invention provides an investment casting shell-mold composition comprising: a binder composition comprising a mixture of 20-98 percent by weight of a colloidal sol comprising inorganic particles, 1-20 percent by weight organic polymer, and 0.1 to 70 percent by weight of inorganic fibers. The inorganic particles have an average particle size smaller than 600 mesh, and the inorganic fibers have an average length to diameter ratio of more than 30.

A preferred embodiment the invention provides a method of forming a shell mold, comprising the steps of providing an investment casting shell-mold composition comprising: a binder composition comprising a mixture of 20-98 percent by weight of a colloidal sol comprising inorganic particles, 1-20 percent by weight organic polymer, and 0.1 to 70 percent by weight of inorganic fibers. The inorganic particles have an average particle size smaller than 600 mesh, and the inorganic fibers have an average length to diameter ratio of more than 30. Refractory flour is mixed with the binder to form a slurry. A primary coated disposable pattern, is coated with the slurry composition to form a slurry coated pattern. The slurry coated pattern is formed by repeatedly dipping the primary coated disposable pattern in the slurry composition, draining, and drying. A stucco coated pattern is formed by stuccoing (applying dry coarse refractory layer) and drying the slurry coated pattern.

In accordance with another preferred embodiment of the invention is provided an investment casting shell-mold composition comprising a binder composition comprising a mixture of 20-98 percent by weight of a colloidal sol comprising inorganic particles, 1-20 percent by weight organic polymer, and 0.1 to 70 percent by weight of inorganic fibers. The inorganic particles have an average particle size smaller than 600 mesh, said inorganic fibers having an average length to diameter ratio of more than 30. Preferably the binder composition includes 1 to 90 percent by weight refractory powder. Preferably the refractory powder has a mesh size in the range of 120 to 400 mesh and said refractory powder is selected from the group consisting of alumino-silicates, fused silica, quartz silica, alumina, zircon, and zirconia. Preferably the colloidal sol comprises silica having an average particle diameter of 3 to 100 nanometers. Preferably the ratio of colloidal silica to latex polymer is greater than 1:1. Preferably the ratio ranges from 10:1 to 1:1, colloid:latex. Preferably the latex polymer includes a blend of acrylic polymers having a pH in the range of from 6 to 11; a viscosity in the range of from 50 to 1000 centipoise; a solids content of from 40 to 65percent; and an average particle size of from 0.05 to 1.0 microns. Preferably the latex polymer includes a blend of acrylic polymers having a pH of from 7 to 10; a viscosity of from 50 to 500; a solids content of from 50 to 60percent; and an average particle size of from 0.1 to 0.5 microns. Preferably the polymer latex is an acrylic latex or a styrene butadiene latex. Preferably the silica sol has an average particle size of less than 30 nanometers. Preferably the latex polymer is an elastomeric latex polymer. Preferably the binder composition include from 1 to 98 percent by weight water.

In accordance with a preferred embodiment of the invention is provided a method of forming a shell mold, comprising the steps of providing an investment casting shell-mold composition comprising:a binder composition comprising a mixture of 20-98 percent by weight of a colloidal sol comprising inorganic particles, 1-20 percent by weight organic polymer, and 0.1 to 70 percent by weight of inorganic fibers. The inorganic particles having an average particle size smaller than 600 mesh, said inorganic fibers having an average length to diameter ratio of more than 30. Then refractory flour is mixed with the binder composition to form a slurry composition, and applied to a pattern, to form a slurry coating on the pattern. Then refractory stucco is applied to the slurry coating to form a slurry and stucco pattern coating. Preferably the refractory flour has a particle size of from 120 to 400 mesh.

In accordance with a preferred embodiment of the invention is provided a method of forming a shell mold, comprising providing an investment casting shell-mold composition comprising a liquid binder composition; mixing refractory flour with the binder to form a slurry composition, providing a primary coated disposable pattern, applying the slurry composition to the pattern to form a partial slurry coating on said pattern, draining at least a portion of said liquid from said partial slurry coating to form a drained partial slurry coating. Then applying the slurry composition to said drained partial slurry coating to form a wet slurry coating, draining at least a portion of said liquid from said wet slurry coating to form a drained slurry coating and applying refractory stucco material to said drained slurry coating to form a refractory stucco and slurry coating, the improvement wherein said liquid binder composition comprises 0.1 to 70 percent by weight of inorganic fibers. Preferably the liquid binder composition further comprises 20-98 percent by weight of a colloidal sol comprising inorganic particles, 1-20 percent by weight organic polymer, and said refractory flour comprises inorganic particles having an average particle size smaller than 600 mesh. Preferably the inorganic fibers have an average length to diameter ratio of more than 30. Preferably the applying said composition to said pattern to form a slurry coated pattern, and said applying refractory stucco to said slurry coated pattern are repeated after drying.

In accordance with a preferred embodiment of the invention is provided a method of forming a shell mold, comprising providing an investment casting shell-mold composition comprising 0.1 to 70 percent by weight inorganic fibers, providing a disposable pattern, applying said composition to said pattern to form a binder coated pattern, applying refractory flour to said binder coated pattern to form a binder and flour pattern coating, the improvement wherein said binder composition comprises. Preferably the investment casting shell-mold composition further comprises 1-20 percent by weight organic polymer.

In accordance with a preferred embodiment of the invention is provided a shell mold formed by the process comprising: providing an investment casting shell-mold composition comprising a binder composition comprising a mixture of 20-98 percent by weight of a colloidal sol comprising inorganic particles, 1-20 percent by weight organic polymer, and 0.1 to 70 percent by weight of inorganic fibers applying refractory flour to the binder to form a slurry, providing a primary coated disposable pattern, applying the slurry composition to the pattern to form a slurry coated pattern, draining and applying a dry coarse refractory stucco layer.

In accordance with a preferred embodiment of the invention is provided a method of forming a shell mold, comprising providing an investment casting shell-mold composition comprising a back-up binder composition comprising a mixture of 20-98 percent by weight of a colloidal sol comprising inorganic particles, 1-20 percent by weight organic polymer, providing a disposable pattern, applying said composition to said pattern to form a binder coated pattern having a binder coating, applying refractory flour to said binder coated pattern to form a binder and flour pattern coating, the improvement comprising adding 0.1 to 70 percent by weight of inorganic fibers to said back-up binder composition to form a fiber containing back-up binder composition. Preferably a back-up binder composition has a green Modulus of Rupture (MOR'), and said fiber containing back-up binder composition has a green Modulus of Rupture (MOR) at least 25 percent greater than said back-up binder composition green Modulus of Rupture (MOR'). Preferably the back-up binder composition has a green adjusted fracture load (AFL'), and said fiber containing back-up binder composition has a green adjusted fracture load (AFL) at least 75 percent greater than said back-up binder composition green adjusted fracture load (AFL'). Preferably a fiber free binder coating formed as said binder coating except without said fiber is at least 25 percent thinner than said binder coating formed from said fiber containing back-up binder composition. Preferably the back-up binder composition has a green Modulus of Rupture (MOR), and said fiber containing back-up binder composition has a green Modulus of Rupture (MOR) at least 35 percent greater than said back-up binder composition green Modulus of Rupture (MOR). Preferably the back-up binder composition has a green adjusted fracture load (AFL'), and said fiber containing back-up binder composition has a green adjusted fracture load (AFL) at least 100 percent greater than said back-up binder composition green adjusted fracture load (AFL'). Preferably the back-up binder composition has a green Modulus of Rupture (MOR'), and said fiber containing back-up binder composition has a green Modulus of Rupture (MOR) at least 50 percent greater than said back-up binder composition green Modulus of Rupture (MOR)'. Preferably the back-up binder composition has a green adjusted fracture load (AFL'), and said fiber containing back-up binder composition has a green adjusted fracture load (AFL) at least 150 percent greater than said back-up binder composition green adjusted fracture load (AFL'). Preferably a fiber free binder coating formed as said binder coating except without said fiber is at least 33 percent thinner than said binder coating formed from said fiber containing back-up binder composition. Preferably a fiber free binder coating is formed as said binder coating except without said fiber having a fiber free green Modulus of Rupture and said binder and flour pattern coating has a fiber containing green Modulus of Rupture at least 50 percent greater than said fiber free green Modulus of Rupture. Preferably a fiber free binder coating is formed as said binder coating except without said fiber having a fiber free green Adjusted Fracture Load and said binder and flour pattern coating has a fiber containing green Adjusted Fracture Load at least 150 percent greater than said fiber free green Adjusted Fracture Load. Preferably a fiber free binder coating is formed as said binder coating except without said fiber having a fiber free green Modulus of Rupture and said binder and flour pattern coating has a fiber containing green Modulus of Rupture at least 25 percent greater than said fiber free green Modulus of Rupture. Preferably a fiber free binder coating is formed as said binder coating except without said fiber having a fiber free green Adjusted Fracture Load and said binder and flour pattern coating has a fiber containing green Adjusted Fracture Load at least 100 percent greater than said fiber free green Modulus of Rupture.

In accordance with a preferred embodiment of the invention is provided a shell mold formed by the process comprising: providing an investment casting shell-mold composition comprising a binder composition comprising a mixture of 20-98 percent by weight of a colloidal sol comprising inorganic particles, 1-20 percent by weight organic polymer; and 0.1 to 70 percent by weight of inorganic fibers applying said composition to a pattern to form a binder coated pattern, applying refractory flour to said binder coated pattern to form a binder and flour pattern coating and firing said binder and flour pattern coating to form a shell mold.

In accordance with a preferred embodiment of the invention is provided a green shell mold formed by the process comprising: providing an investment casting shell-mold composition comprising a binder composition comprising a mixture of 20-98 percent by weight of inorganic particles, 1-20 percent by weight organic polymer, and 0.1 to 70 percent by weight of inorganic fibers, mixing refractory flour and the binder to form a slurry composition, providing a primary coated disposable pattern, applying the slurry composition to the pattern to form a wet slurry coating on said pattern, draining at least a portion of said water from said wet slurry coating to form a drained slurry coating, applying a coarse refractory stucco to said drained slurry coating and removing said pattern from said drained slurry coating to form a green shell mold.

The following Examples described preferred embodiments of the claimed invention. These Examples should be construed as illustrating the claimed invention, and not as limiting the same.

### EXAMPLE 1: back-up binder composition

60.29 grams colloidal silica (SiO₂: 10 nanometers average particle diameter); 18.96 grams deionized water; 15.57 grams acrylic polymer emulsion: 55 percent by weight acrylic polymer; 45 percent by weight water; (Duramax TM B 1000); 1.46 grams inorganic fibers (Al₂O₃ and SiO₂) having a median length of 650 µm; median diameter of 8.5 µm and average length to diameter (aspect) ratio of 80 and a composition of: 46 percent by weight SiO₂; 15 percent by weight Al₂O₃; 16 percent by weight CaO; 12 percent by weight MgO; 6 percent by weight FeO and 5 percent by weight impurities. The binder composition is mixed with refractory flour to form a binder and flour slurry. The refractory flour has particle size of between 120 mesh and 325 mesh. The refractory flour is fused SiO₂ or Al₂O₃•SiO₂.

### EXAMPLE 2

A wax model is dipped into a primary slurry for the initial coating of refractory material to form a coated wax model. The coated wax model is dipped into the binder and flour slurry formed by following the procedure of EXAMPLE 1, for about five seconds. Then the wax model is lifted from the slurry and allowed to drain for some 30-60 seconds. The wax model with the drained slurry layer is then coated with coarse sand by dipping it into a fluid bed of sand for about five seconds or by use of a rainfall sander that sprinkles the stucco over the pattern . The sand is composed of fused SiO₂ or Al₂O₃•SiO₂. The mesh size of the sand is between 30 and 100 mesh. This procedure is repeated three times to form a coat of a width about 5 mm thickness. The coated wax model is then heated to melt and then remove the wax and the mold formed is then fired at a temperature between 1600 and 2000°F for from about 1 to 3 hours. The finished mold is then used by pouring liquid metal into the mold allowing the metal to cool and then removing the mold from the cooled metal. The metals which may be molded include iron, aluminum, nickel and alloys thereof.

### EXAMPLE 3

60.85 grams colloidal silica (SiO₂: 10 nanometers average particle diameter); 19.64 grams deionized water; 15.71 grams acrylic polymer emulsion: 55 percent by weight acrylic polymer; 45 percent by weight water, (Duramax TM B 1000); 1.47 grams alkoxylated primary alcohol; LF-60 MOD (wetting agent) manufactured by DeForest Enterprises Inc.; 0.49 grams silicone emulsion DCH-10 (defoamer) manufactured by Dow Coming; 0.02 grams broad spectrum bactericide; GROTAN (biocide) manufactured by US Professional Labs, 0.02 grams hydroxy compound; ammonia mask (fragrance) manufactured by Alpine Aromatics International Inc., 1.8 grams inorganic fibers (Al₂O₃ and SiO₂) having a median length of 650 µm; median diameter of 8.5 µm and average length to diameter (aspect) ratio of about 80 and a composition of: 46 percent by weight SiO₂; 13.5 percent by weight Al₂O₃; 17.7 percent by weight CaO; 9.7 percent by weight MgO; 7 percent by weight FeO and 6.1 percent by weight others. The binder composition is mixed with refractory flour. The refractory flour has particle size of between 120 mesh and 325 mesh. The refractory flour is fused SiO₂.

Three backup binder slurries were prepared according to Table I below. The Nyacol® 830 (NYA) system is a fiber and polymer free system distributed by Ransom & Randolph , the Customcote™ binder (CUS) manufactured by Ransom & Randolph is a fiber free polymer containing system and the CSB is the said binder containing fiber and polymer.

**Table I:**

| Formulas and viscosity ranges of the three slurries | | | |
|---|---|---|---|
| System ID→ | NYA | CUS | CSB |
| Binder | Nyacol® 830* | Customcote™ Binder | back-up binder composition of Example 3 |
| Retractory, Loading | Ranco-Sil -140F, 63% loading | Ranco-Sil -140F, 63% loading | Kanco-Sil -140F, 62% loading |
| Viscosity | 13 - 15 sec, #4 Zahn Cup | 10 - 12 sec, #4 Zahn Cup | 23 - 25 sec, #4 Zahn Cup |

| | | | |
|---|---|---|---|
| * Diluted with water to have a binder solids bemg 25.0%. | | | |

All slurries were used to build test bar specimens for green strength determination. All systems used a 30x50 fused silica stucco sand.
The green bending properties are shown in Table II. For reference all data has been made relative to the NYA system at three backup coats and a seal dip (i.e. this point is equal to 1.0).

**Table II:**

| Relative Green bending properties of the three systems with various coats | | | | |
|---|---|---|---|---|
| Property → System↓ | | Thickness | Green MOR | Green AFL |
| 3 Coats + Seal | NYA | 1.00 | 1.00 | 1.00 |
| | CUS | 0.94 | 1.63 | 1.46 |
| | CSB | 1.44 | 2.83 | 5.92 |
| 4 Coats + Seal | NYA | 1.19 | 1.55 | 2.20 |
| | CUS | 1.20 | 2.03 | 2.97 |
| | CSB | 1./8 | 2.98 | 9.50 |
| 5 Coats + Seal | NYA | 1.44 | 1.70 | 3.56 |
| | CUS | 1.35 | 2.46 | 4.53 |
| | CSB | 2.10 | 3.29 | 14.72 |

From Table II it can be seen that the Green MOR and AFL of the CSB system at three coats, 2.83 and 5.92 respectively, is greater than the same value for the NYA and CUS system at 4 and 5 backup coats. This indicates 3 backup coats of the CSB slurry will replace 4 and 5 backup coats of the NYA and CUS slurry.

Fibers useful in investment casting shell-mold compositions in accordance with the invention are organic and inorganic fibers. Most preferably inorganic fibers. Most preferably fibers useful in investment casting shell-mold compositions in accordance with the invention have an average length to diameter ratio of more than 30.

Particles useful in investment casting shell-mold compositions in accordance with the invention are organic and inorganic particles. Most preferably inorganic particles. Preferably particles useful in investment casting shell-mold compositions in accordance with the invention have an average largest diameter of less than 1 micron. Most preferably particles useful in investment casting shell-mold compositions in accordance with the invention have an average largest diameter of less than 0.5 micron.

While the invention has been described in terms of various preferred embodiments, those skilled in the art will recognize that various changes and modifications can be made without departing from the spirit and scope of the invention, as defined in the appended claims.

## Claims

1. An investment casting shell-mold binder composition comprising a mixture of a colloidal sol comprising inorganic particles having an average particle size that is smaller than 600 mesh and organic latex polymer,
**characterized in that** the composition comprises
- 20-98 percent by weight of said colloidal sol,
- 1-20 percent by weight of said latex polymer, and
- further 0.1 to 70 percent by weight of inorganic fibers having an average length to diameter ratio of more than 30.

2. The composition according to claim 1, further comprising 1 to 90 percent by weight refractory powder.

3. The composition according to claim 2, wherein the refractory powder has a mesh size in the range of 120 to 400 mesh and said refractory powder is selected from the group consisting of alumino-silicates, fused silica, quartz silica, alumina, zircon, and zirconia.

4. The composition according to claim 1 wherein said colloidal sol comprises silica having an average particle diameter of 3 to 100 nanometers.

5. The composition according to claim 1 wherein the ratio of colloidal sol to latex polymer is greater than 1:1.

6. The composition according to claim 1 wherein the ratio of colloid : latex polymer ranges from 10:1 to 1:1, colloid : latex.

7. The composition according to claim 1 wherein said latex polymer includes a blend of acrylic polymers having a pH in the range of from 6 to 11; a viscosity in the range of from 50 to 1000 centipoise; a solids content of from 40 to 65 percent by weight; and an average particle size of from 0.05 to 1.0 microns.

8. The composition according to claim 1 wherein said latex polymer includes a blend of acrylic polymers having a pH of from 7 to 10; a viscosity of from 50 to 500; a solids content of from 50 to 60 percent by weight; and an average particle size of from 0.1 to 0.5 microns.

9. The composition according to claim 1 wherein the latex polymer is an acrylic latex or a styrene butadiene latex.

10. The composition according to claim 1, wherein said sol has an average particle size of less than 30 nanometers.

11. The composition according to claim 1, wherein said latex polymer is an elastomeric latex polymer.

12. The composition according to claim 1, further comprising 1 to 98 percent by weight water.

13. A method of forming a shell mold, comprising the application of the composition according to claim 1.

14. The method of claim 13, which comprises the steps of
(a) providing an investment casting shell-mold binder composition according to claim 1,
(b) providing a disposable pattern,
(c) mixing refractory flour and the binder composition to form a slurry composition,
(d) applying said slurry composition to said pattern to form a slurry coating on said slurry coated pattern,
(e) applying refractory stucco to said slurry coating to form a slurry and stucco pattern coating;
(f) up to three times repeating steps (d) and (e); and
(g) eliminating said disposable pattern by heating and draining liquid pattern material.

15. The method of claim 14 wherein said refractory flour has a particle size of from 120 to 400 mesh.

16. The method of claim 14 or 15, wherein steps (d) and (e) are conducted three times.

17. The method of any one of claims 14 to 16, wherein after step(s) (d) said slurry coated pattern is drained to form a drained coated pattern and in step(s) (e) a dry coarse refractory stucco is applied to said drained coated pattern.

18. The method of any one of claims 13 to 17, wherein a fiber free binder coating formed as said binder coating except without said fiber is at least 25 percent, preferably at least 33 percent, thinner than said binder coating formed from said fiber containing back-up binder composition.

19. A shell mold obtainable by any one of methods 13 to 17.

20. The shell mold of claim 19, wherein said shell mold is a green shell mold.

21. The shell mold of claim 20, which has a green Modulus of Rupture (MOR) which is at least 25 percent, preferably at least 35 percent, more preferably at least 50 percent, greater than the green Modulus of Rupture (MOR) of a green shell mold obtained by applying the binder composition according to claim 1 without said fibers.

22. The shell mold of claim 20, which has a green adjusted fracture load (AFL) which is at least 75 percent, preferably at least 100 percent, more preferably at least 150 percent, greater than the green adjusted fracture load (AFL) of a green shell mold obtained by applying the binder composition according to claim 1 without said fibers.

## Patentansprüche

1. Bindemittelzusammensetzung für eine Investmentguss-Maskenforrn, die eine Mischung aus kolloidalem Sol, das anorganische Teilchen mit einer mittleren Teilchengröße aufweist, die kleiner ist als 600 mesh, und ein organisches Latexpolymer, umfasst,
**dadurch gekennzeichnet, dass** die Zusammensetzung aufweist:
- 20 bis 98 Gew.-% des kolloidalen Sols,
- 1 bis 20 Gew.-% des Latexpolymers und
- außerdem 0,1 bis 70 Gew.-% anorganische Fasern mit einem mittleren Länge/Durchmesser-Verhältnis von mehr als 30.

2. Zusammensetzung nach Anspruch 1, die außerdem 1 bis 90 Gew.-% feuerfestes Pulver aufweist.

3. Zusammensetzung nach Anspruch 2, worin das feuerfeste Pulver eine Mesh-Größe im Bereich von 120 bis 400 mesh aufweist und das feuerfeste Pulver ausgewählt ist aus der Gruppe, bestehend aus Aluminiumsilikaten, Quarzglas, Quarzmehl, Aluminiumoxid, Zirkon und Zirkoniumdioxid.

4. Zusammensetzung nach Anspruch 1, worin das kolloidale Sol Siliciumdioxid mit einem mittleren Teilchendurchmesser von 3 bis 100 Nanometer aufweist.

5. Zusammensetzung nach Anspruch 1, worin das Verhältnis des kolloidalen Sols zum Latexpolymer größer als 1:1 ist.

6. Zusammensetzung nach Anspruch 1, worin das Verhältnis von Kolloid:Latexpolymer von 10:1 bis 1:1 (Kolloid:Latex) reicht.

7. Zusammensetzung nach Anspruch 1, worin das Latexpolymer eine Mischung aus Acrylpolymeren mit einem pH-Wert im Bereich von 6 bis 11; einer Viskosität im Bereich von 50 bis 1.000 Centipoise; einen Feststoffgehalt von 40 bis 65 Gew.-%; und eine mittlere Teilchengröße von 0,05 bis 1,0 µm enthält.

8. Zusammensetzung nach Anspruch 1, worin das Latexpolymer eine Mischung aus Acrylpolymeren umfasst mit einem pH-Wert von 7 bis 20; einer Viskosität von 50 bis 500; einem Feststoffgehalt von 50 bis 60 Gew.-% und einer mittleren Teilchengröße von 0,1 bis 0,5 µm.

9. Zusammensetzung nach Anspruch 1, worin das Latexpolymer ein Acryllatex oder ein Styrol/Butadien-Latex ist.

10. Zusammensetzung nach Anspruch 1, worin das Sol eine mittlere Teilchengröße von weniger als 30 Nanometer besitzt.

11. Zusammensetzung nach Anspruch 1, worin das Latexpolymer ein elastomeres Latexpolymer ist.

12. Zusammensetzung nach Anspruch 1, die außerdem 1 bis 98 Gew.-% Wasser enthält.

13. Verfahren zur Herstellung einer Maskenform durch Anwenden der Zusammensetzung nach Anspruch 1.

14. Verfahren nach Anspruch 13, das die Stufen aufweist:
(a) Bereitstellen einer Bindemittelzusammensetzung für eine Investmentguss-Maskenform gemäß Anspruch 1,
(b) Bereitstellen einer Einweg-Musterform,
(c) Mischen von feuerfestem Pulver und der Bindemittelzusammensetzung zur Bildung einer Aufschlämmung,
(d) Applizieren der Aufschlämmung, um eine Aufschlämmungsbeschichtung auf der Aufschlämmungs-beschichteten Musterform zu bilden,
(e) Applizieren von feuerfestem Pulver auf der Aufschlämmungsbeschichtung, um eine Aufschlämmungs- und Pulvermusterformbeschichtung auszubilden,
(f) Wiederholen der Stufen (d) und (e) bis zu dreimal; und
(g) Eliminieren der Einweg-Musterform durch Erhitzen und Ablaufenlassen von flüssigem Musterformmaterial.

15. Verfahren nach Anspruch 14, worin das feuerfeste Pulver eine Teilchengröße von 120 bis 400 mesh aufweist.

16. Verfahren nach Anspruch 14 oder 15, worin die Stufen (d) und (e) dreimal durchgeführt werden.

17. Verfahren nach einem der Ansprüche 14 bis 16, worin nach der (den Stufe(n) (d) die Aufschlämmungs-beschichtete Form ablaufen gelassen wird, um eine drainierte beschichtete Musterform zu bilden, und in Stufe(n) (e) ein trockener grober feuerfester Stuck auf der drainierten beschichteten Form appliziert wird.

18. Verfahren nach einem der Ansprüche 13 bis 17, worin eine faserfreie Bindemittelbeschichtung als Bindemittelbeschichtung ohne Faser mindestens 25%, vorzugsweise mindestens 33%, dünner ist als eine Bindemittelbeschichtung, die aus der Faser enthaltenden Trägerform-Bindemittelbeschichtung gebildet wird.

19. Maskenform, erhältlich nach einem der Verfahren 13 bis 17.

20. Maskenform nach Anspruch 19, worin die Maskenform eine grüne Maskenform ist.

21. Maskenform nach Anspruch 20, die einen grünen Bruchmodul (Modulus of Rupture (MOR)) aufweist, der mindestens 25%, vorzugsweise mindestens 35%, insbesondere mindestens 50% größer als der grüne Bruchmodul (Modulus of Rupture (MOR)) einer grünen Maskenform ist, die durch Applikation der Bindemittelzusammensetzung gemäß Anspruch 1 ohne Fasern erhalten wurde.

22. Maskenform nach Anspruch 20, die eine eingestellte grüne Bruchbelastung (green adjusted fracture load (AFL)) aufweist, die mindestens 75%, vorzugsweise mindestens 100%, insbesondere mindestens 150% größer ist als die eingestellte grüne Bruchbelastung (AFL) einer grünen Maskenform, die durch Applizieren der Bindemittelzusammensetzung gemäß 1 ohne Fasern erhalten wurde.

## Revendications

1. Composition liante pour moulage en coquille à modèle perdu, comprenant un mélange d'un sol colloïdal comprenant des particules inorganiques ayant une taille moyenne qui est inférieure à 600 mesh et d'un polymère de latex organique,
**caractérisée en ce que** ladite composition comprend
- 20-98 % en poids dudit sol colloïdal,
- 1-20 % en poids dudit polymère de latex et
- en outre, 0,1 à 70 % en poids de fibres inorganiques ayant un rapport moyen de la longueur au diamètre supérieur à 30.

2. Composition selon la revendication 1, comprenant, en outre, 1 à 90 % en poids d'une poudre réfractaire.

3. Composition selon la revendication 2, dans laquelle la poudre réfractaire a une taille comprise entre 120 et 400 mesh et ladite poudre réfractaire est choisie dans l'ensemble constitué d'aluminosilicates, de silice fondue, de silice de quartz, d'alumine, de zircon et d'oxyde de zirconium.

4. Composition selon la revendication 1, dans laquelle ledit sol colloïdal comprend de la silice ayant un diamètre moyen des particules de 3 à 100 nanomètres.

5. Composition selon la revendication 1, dans laquelle le rapport du sol colloïdal au polymère de latex est supérieur à 1:1.

6. Composition selon la revendication 1, dans laquelle le rapport de colloïde : polymère de latex est compris entre 10:1 et 1:1 de colloïde : latex.

7. Composition selon la revendication 1, dans laquelle ledit polymère de latex comprend un mélange de polymères acryliques ayant un pH compris entre 6 et 11, une viscosité comprise entre 50 et 1000 centipoises, une teneur en solides de 40 à 65 % en poids et une taille moyenne des particules de 0,05 à 1,0 micromètre.

8. Composition selon la revendication 1, dans laquelle ledit polymère de latex comprend un mélange de polymères acryliques ayant un pH de 7 à 10, une viscosité de 50 à 500, une teneur en solides de 50 à 60 % en poids et une taille moyenne des particules de 0,1 à 0,5 micromètre.

9. Composition selon la revendication 1, dans laquelle le polymère de latex est un latex acrylique ou un latex au styrène-butadiène.

10. Composition selon la revendication 1, dans laquelle ledit sol a une taille moyenne des particules inférieure à 30 nanomètres.

11. Composition selon la revendication 1, dans laquelle ledit polymère de latex est un polymère de latex élastomère.

12. Composition selon la revendication 1, comprenant, en outre, 1 à 98 % en poids d'eau.

13. Procédé de formation d'un moulage en coquille, comprenant l'application de la composition selon la revendication 1.

14. Procédé selon la revendication 13, comprenant les étapes consistant à :
(a) fournir une composition liante pour moulage en coquille à modèle perdu selon la revendication 1 ;
(b) fournir un modèle jetable ;
(c) mélanger de la farine réfractaire et la composition liante pour former une composition sous forme de suspension ;
(d) appliquer ladite composition sous forme de suspension sur ledit modèle pour former un revêtement formé de la suspension sur ledit modèle revêtu de la suspension ;
(e) appliquer du stuc réfractaire sur ledit revêtement formé de la suspension pour former un revêtement du modèle avec la suspension et le stuc ;
(f) recommencer jusqu'à trois fois les étapes (d) et (e) ; et
(g) éliminer ledit modèle jetable en chauffant et en faisant s'écouler la matière du modèle liquide.

15. Procédé selon la revendication 14, dans lequel ladite farine réfractaire a une taille de particules de 120 à 400 mesh.

16. Procédé selon la revendication 14 ou 15, dans lequel on effectue trois fois les étapes (d) et (e).

17. Procédé selon l'une quelconque des revendications 14 à 16, dans lequel, après la ou les étapes (d), on assèche ledit modèle revêtu de la suspension pour former un modèle revêtu asséché et, dans la ou les étapes (e), on applique un stuc réfractaire grossier sec sur ledit modèle revêtu asséché.

18. Procédé selon l'une quelconque des revendications 13 à 17, dans lequel un revêtement de liant exempt de fibres, formé en tant que revêtement de liant mais sans lesdites fibres, est d'au moins 25 %, de préférence d'au moins 33 % plus mince que ledit revêtement de liant formé à partir de ladite composition liante de renforcement contenant des fibres.

19. Moulage en coquille pouvant être obtenu au moyen de l'un quelconque des procédés 13 à 17.

20. Moulage en coquille selon la revendication 19, ledit moulage en coquille étant un moulage en coquille vert.

21. Moulage en coquille selon la revendication 20, qui a un module de rupture (MDR) du produit vert qui est d'au moins 25 %, de préférence d'au moins 35 %, de façon plus appréciée d'au moins 50 % supérieur au module de rupture (MDR) du produit vert d'un moulage en coquille vert obtenu par application de la composition liante selon la revendication 1 sans lesdites fibres.

22. Moulage en coquille selon la revendication 20, qui a une charge ajustée de fracture (CAF) du produit vert qui est d'au moins 75 %, de préférence d'au moins 100 %, de façon plus appréciée d'au moins 150 % supérieure à la charge ajustée de fracture (CAF) du produit vert d'un moulage en coquille vert obtenu par application de la composition liante selon la revendication 1 sans lesdites fibres.
